# EUROPEAN PATENT APPLICATION

(11) **EP 2 554 894 A1**
(43) Date of publication of application: **06.02.2013**
(21) Application number: 10848978.2
(22) Date of filing: 16.07.2010
(51) Int. Cl.: F21S 2/00, H01L 31/04, F21Y 101/00

(54) **PSEUDO-SUNLIGHT IRRADIATING APPARATUS**

(30) Priority: 30.03.2010 JP 2010079572
(71) Applicant: Sharp Kabushiki Kaisha, Osaka-shi, Osaka 545-8522 (JP)
(72) Inventor: MINAMI, Kohji, Osaka-shi, Osaka 545-8522 (JP); NAKAMURA, Atsushi, Osaka-shi, Osaka 545-8522 (JP)
(74) Representative: Müller - Hoffmann & Partner
(86) International application number: PCT/JP2010/062098
(87) International publication number: WO 2011/121805

(57) **Abstract**

A pseudo-sunlight irradiating apparatus (18) includes optical system sets (100 and 101) each including a xenon light source (16) and a halogen light source (17), a light guide plate (10) and a prism sheet (11). Transmittance adjusting sheets (12a to 12c) are provided on the prism sheet (11). The transmittance adjusting sheets (12a to 12c) have at least one of properties in which (i) most light whose wavelength is shorter than a predetermined wavelength pass through and most light whose wavelength is longer than the predetermined wavelength is reflected and (ii) most light whose wavelength is shorter than the predetermined wavelength is reflected and most light whose wavelength is longer than the predetermined wavelength pass through. It is thus possible to independently adjust a transmittance of xenon light and a transmittance of halogen light.

## Description

### Technical Field

The present invention relates to a pseudo-sunlight irradiating apparatus that irradiates an irradiation surface with pseudo sunlight.

### Background Art

The importance of a solar cell has been recognized as a clean energy source, and demand for the solar cell has increased. The solar cell is used in various technical fields ranging from power sources for large-sized electric equipments to small power sources for precision electronic devices. If the solar cell is to be widely used in various technical fields, then properties of the solar cell, particularly, an output property of the solar cell should be precisely measured. Otherwise, users predict that various inconveniences will occur when they use the solar cell. Therefore, especially a technique is demanded which is available to inspection, measurement and testing of the solar cell and which can irradiate a large area with high-accuracy pseudo sunlight.

To comply with the demand, a pseudo-sunlight irradiating apparatus has been recently developed as a device that can irradiate pseudo sunlight. Generally, the pseudo-sunlight irradiating apparatus is used for measuring properties, such as an output property, of the solar cell by irradiating a light receiving surface of a solar panel with artificial light (pseudo sunlight) whose illuminance is uniform.

A major one of the requirements which the pseudo sunlight should meet is to make an emission spectrum of the pseudo sunlight similar to that of the standard solar light (set by the Japanese Industrial Standards). However, the pseudo-sunlight irradiating apparatus has a problem that it is extremely difficult to irradiate, with light whose illuminance is uniform, a whole planar light receiving surface (or a whole region) of a solar cell. This is because the pseudo-sunlight irradiating apparatus has a light source lamp whose shape is regarded as a dot or a line. In view of the circumstances, Patent Literatures 1 and 2 disclose techniques for adjusting illuminance unevenness of the pseudo-sunlight irradiating apparatus, by taking into consideration the above problem.

Patent Literature 1 discloses a pseudo-sunlight irradiating apparatus in which a halogen lamp and a xenon lamp are disposed in respective chambers adjacent to each other. Specifically, the pseudo-sunlight irradiating apparatus is configured so that (i) dedicated optical filters are disposed in an opening region above the respective halogen and xenon lamps and (ii) pseudo sunlight is irradiated by lighting the halogen and xenon lamps from below a solar cell. This makes it possible to adjust illuminance unevenness of each of the halogen and xenon lamps by disposing, as appropriate, reflecting plates in the respective chambers in which the respective halogen and xenon lamps are disposed.

Meanwhile, Patent Literature 2 discloses a pseudo-sunlight irradiating apparatus in which (i) a light receiving surface of a solar cell is virtually divided into a plurality of regions and (ii) light amount adjusting members are disposed for the respective plurality of regions thus virtually divided. Specifically, illuminance of a region having the lowest illuminance is defined as a reference illuminance, and three types of light amount adjusting members that have respective different light shielding rates from one another are disposed on regions other than the region having the lowest illuminance. This allows the individual plurality of regions to have substantially uniform illuminance in a case where the light receiving surface is irradiated by a pseudo-sunlight irradiating apparatus.

### Citation List

### Patent Literature

### Patent Literature 1

Japanese Patent Application Publication, Tokukai No. 2002-48704 A (Publication Date: February 15, 2002)

### Patent Literature 2

Japanese Patent Application Publication, Tokukai No. 2006-216619 A (Publication Date: August 17, 2006)

### Summary of Invention

### Technical Problem

The techniques disclosed in Patent Literatures 1 and 2, however, cannot sufficiently achieve a uniform illuminance distribution of a pseudo-sunlight irradiating apparatus. For example, in a case where the pseudo-sunlight irradiating apparatus is configured so that light emitted from each of a plurality of light sources is directed to a light guide plate and the light is emitted from the light guide plate, illuminance unevenness may occur which differs from wavelength band to wavelength band which each of the plurality of light sources covers. To address this, it is necessary to employ separate illuminance adjusting techniques for the respective plurality of light sources.

The technique disclosed in Patent Literature 1 can adjust illuminance for each of the chambers, but cannot adjust light illuminance in a case where light emitted from each of a plurality of light sources is directed to a light guide plate and the light is emitted from the light guide plate. Therefore, in a case where the plurality of light sources cause illuminance unevenness that differ from chamber to chamber, if adjustment of illuminance of the light emitted from the light guide plate is carried out with reference to one light source, the adjusted illuminance is not in accordance with other light sources.

Further, according to the technique disclosed in Patent Literature 2, in the case where the light emitted from each of the plurality of light sources is directed to the light guide plate and the illuminance of the light emitted from the light guide plate is adjusted, the light source is away from the solar cell. Therefore, even if illuminance adjustment is carried out in the vicinity of each of the plurality of light sources, the illuminance adjustment for each of the plurality of light sources broadly affect illuminance adjustments for others of the plurality of light sources. Therefore, it is difficult to satisfactorily improve accuracy in adjustment of illuminance unevenness.

The present invention is made in view of the problems, and an object of the present invention is to provide a pseudo-sunlight irradiating apparatus that independently carries out an illuminance adjustment with high precision, in accordance with a corresponding one of a plurality of light sources, with respect to light emitted from a corresponding one of the plurality of light sources.

### Solution to Problem

A pseudo-sunlight irradiating apparatus of the present invention, to attain the object, includes: a first light source which emits first light; a first optical member which gives a directivity to the first light; a first optical filter which adjusts an emission spectrum of the first light to which the directivity is given; a second light source which emits second light different from the first light; a second optical member which gives a directivity to the second light; a second optical filter which adjusts an emission spectrum of the second light to which the directivity is given; a light selection element which selects and emits (i) light, whose wavelength is shorter than a predetermined wavelength, in the first light whose emission spectrum has been adjusted and (ii) light, whose wavelength is longer than the predetermined wavelength, in the second light whose emission spectrum has been adjusted; a light guide plate which (i) the light whose wavelength is shorter than the predetermined wavelength and (ii) the light whose wavelength is longer than the predetermined wavelength that are selected by the light selection element enter; light extraction means, provided to the light guide plate, which directs, toward an irradiation surface, (i) the light whose wavelength is shorter than the predetermined wavelength and (ii) the light whose wavelength is longer than the predetermined wavelength which have entered the light guide plate; and a transmittance adjusting member, provided so as to be closer to the irradiation surface than to the light extraction means, in which a light transmittance has a wavelength dependency.

According to the configuration, the transmittance has the wavelength dependency in the transmittance adjusting member. Therefore, it is possible to adjust the transmittance of the first light or the second light which is extracted by light extraction means, by using the transmittance adjusting member that has a property in which the first light or the second light whose transmittance needs to be adjusted hardly passes through. Accordingly, it is possible to uniform illuminance distribution by adjusting the transmittance, provided that the transmittance adjusting member is provided in a region where the illuminance unevenness occurs, that is, a region where the transmittance needs to be adjusted. In other words, it is possible to suppress the illuminance unevenness of the light that is emitted toward the irradiation surface.

According to the pseudo-sunlight irradiating apparatus of the present invention, it is thus possible to adjust a transmittance of light by employing the transmittance adjusting member that has a wavelength dependency which varies in accordance with wavelength of the light whose transmittance needs to be adjusted. The transmittance adjusting member thus has the wavelength dependency which varies in accordance with the light. Therefore, even if other light passes through the transmittance adjusting member, the transmittance of the light is not affected by the other light. As such, it is possible to independently adjust the transmittance of the first light and the transmittance of the second light. This allows a precise adjustment of illuminance of the pseudo-sunlight irradiating apparatus.

Further, it is possible to adjust, as appropriate, the illuminance unevenness of the pseudo-sunlight irradiating apparatus by providing, as needed, the transmittance adjusting member in the region where the illuminance unevenness occurs, that is, the region where the transmittance needs to be adjusted.

For a fuller understanding of the nature and advantages of the invention, reference should be made to the ensuing detailed description taken in conjunction with the accompanying drawings.

### Advantageous Effects of Invention

According to a pseudo-sunlight irradiating apparatus of the present invention, it is possible to adjust a transmittance of light by employing a transmittance adjusting member that has a wavelength dependency which varies in accordance with wavelength of the light whose transmittance needs to be adjusted. Therefore, even if a region where a transmittance of light needs to be adjusted and a region where a transmittance of the other light needs to be adjusted coexist on an irradiation surface, the transmittance of the light and the transmittance of the other light can be adjusted simultaneously. It is thus possible to uniform illuminance distribution by adjusting the transmittance, provided that the transmittance adjusting member having the wavelength dependency which varies in accordance with the wavelength of the light whose transmittance needs to be adjusted is provided in a region where illuminance unevenness occurs, that is, a region where the transmittance needs to be adjusted. In other words, it is possible to suppress the illuminance unevenness of the light that is emitted toward the irradiation surface.

### Brief Description of Drawings

Fig. 1

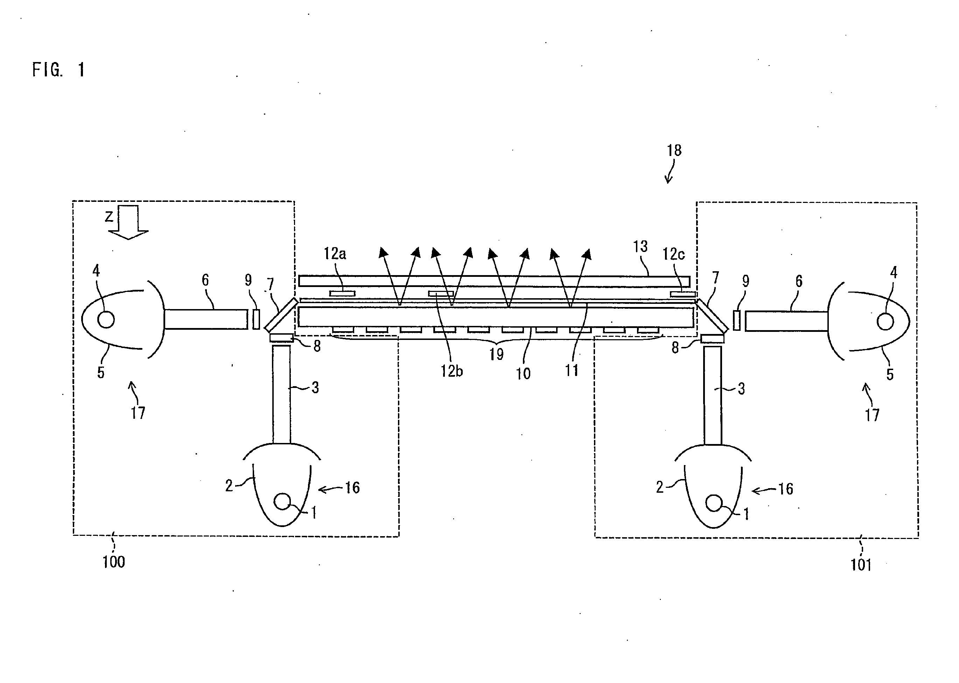

   Fig. 1 shows a major configuration of a pseudo-sunlight irradiating apparatus in accordance with an embodiment of the present invention.
Fig. 2

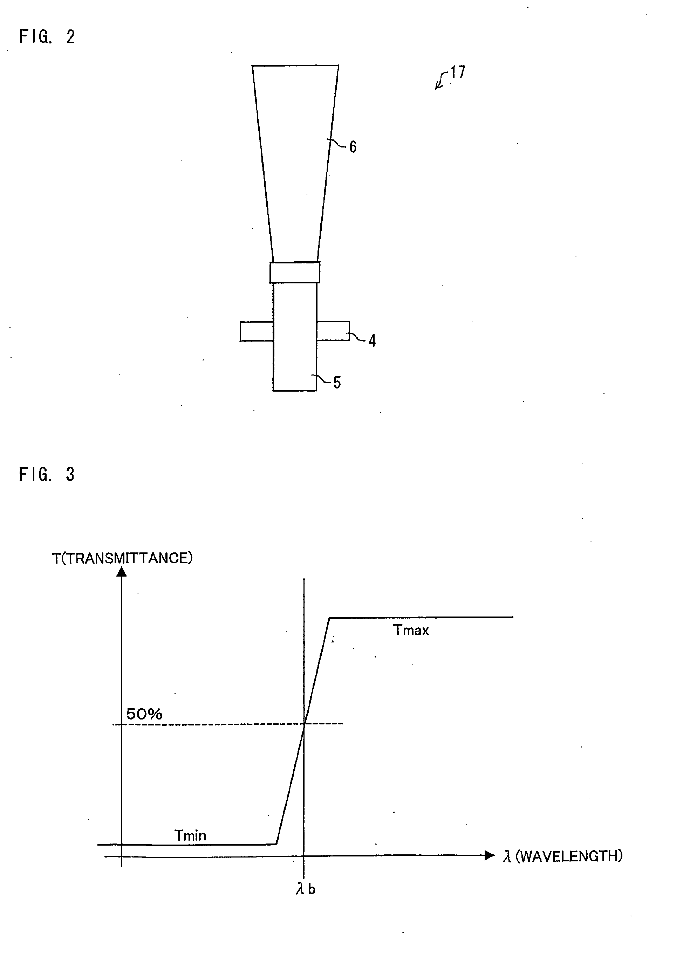

   Fig. 2 is a top view of a halogen light source which top view is obtained when viewed from a direction indicated by an arrow Z shown in Fig. 1.
Fig. 3
   Fig. 3 shows how a transmittance of light, that enters, at an incident angle of 45°, a wavelength selection mirror in accordance with an embodiment of the present invention, changes depending on wavelength.
Fig. 4

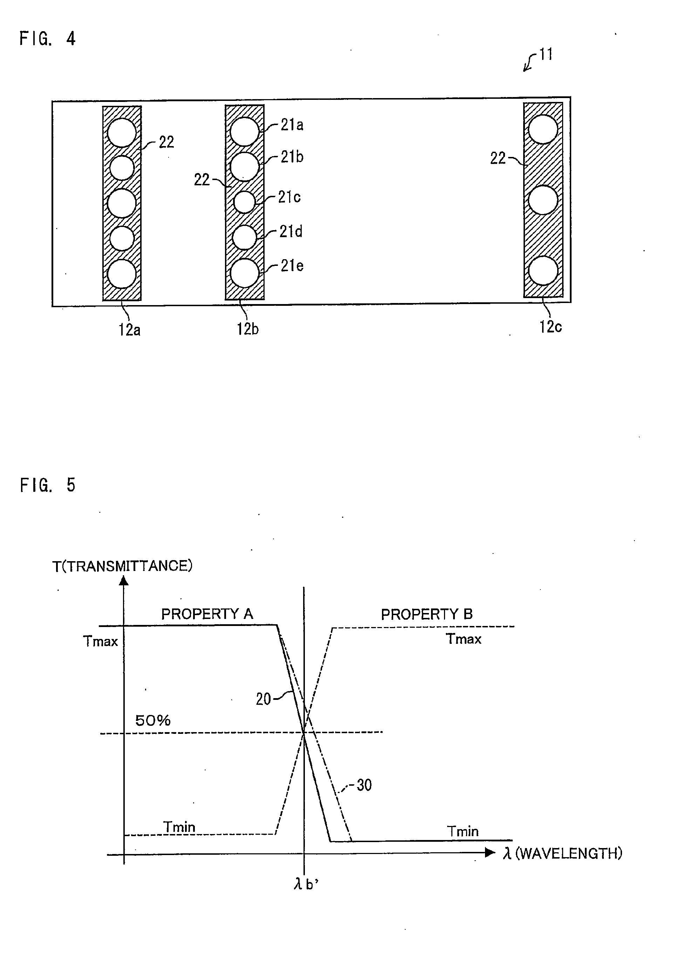

   Fig. 4 shows a configuration of a transmittance adjusting sheet in accordance with an embodiment of the present invention.
Fig. 5
   Fig. 5 shows how a transmittance of light, that enters, at an incident angle, a wavelength selection film region in accordance with an embodiment of the present invention, changes depending on wavelength, in a case where the incident angle ranges from 40° to 45°.
Fig. 6

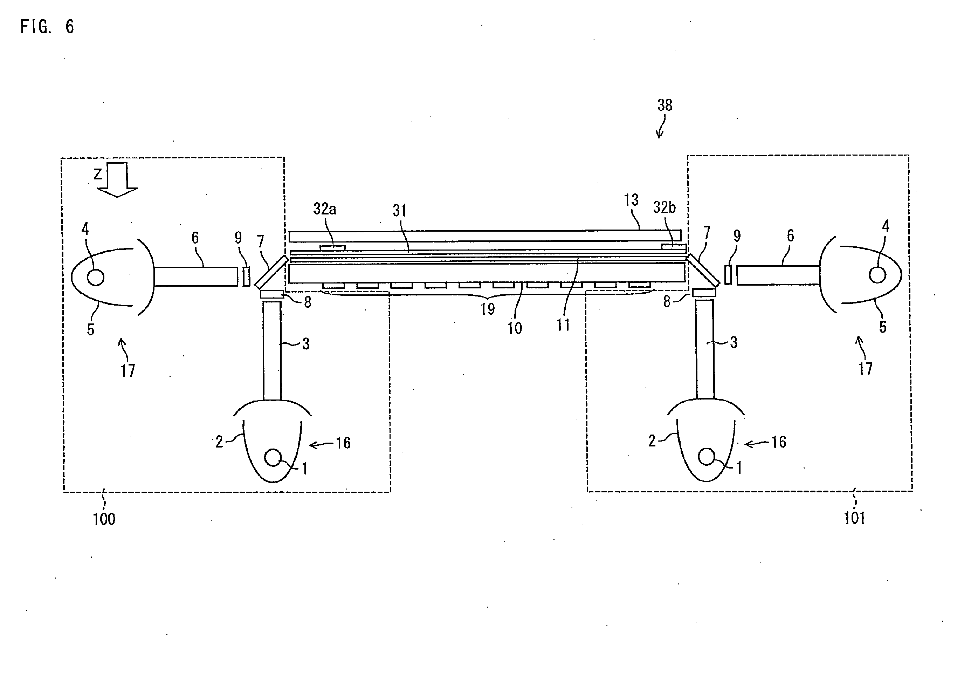

   Fig. 6 shows a major configuration of another pseudo-sunlight irradiating apparatus in accordance with an embodiment of the present invention.
Fig. 7

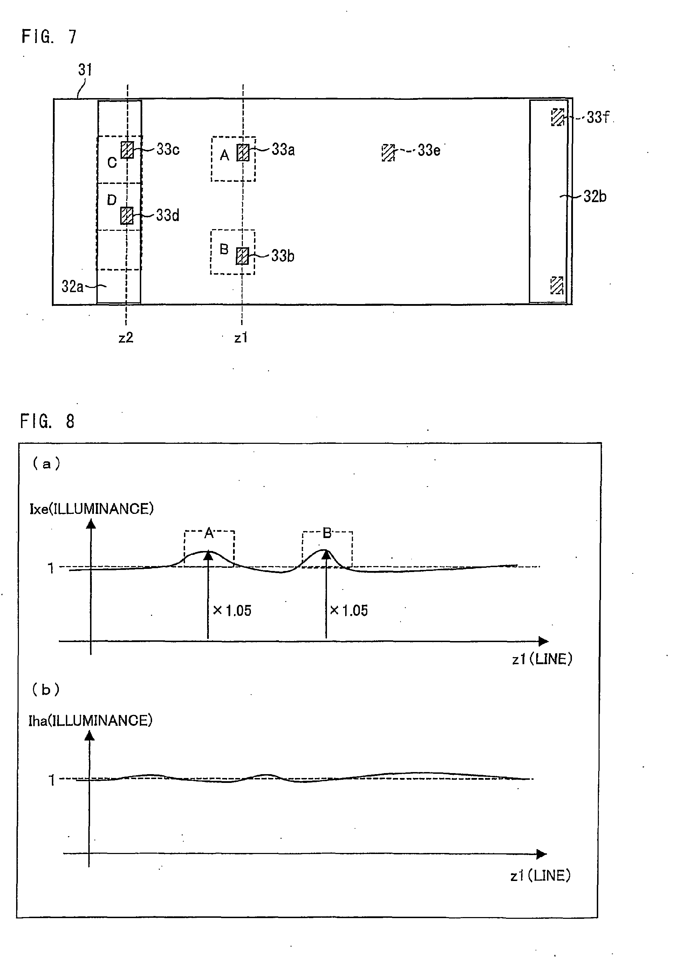

   Fig. 7 shows a configuration of another transmittance adjusting sheet in accordance with an embodiment of the present invention.
Fig. 8
   Fig. 8 is a chart of illuminance distribution obtained on a line z1 of a prism sheet in a case where no transmittance adjusting sheet in accordance with an embodiment of the present invention is used ((a) of Fig. 8 shows a case of xenon light, and (b) of Fig. 8 shows a case of halogen light).
Fig. 9

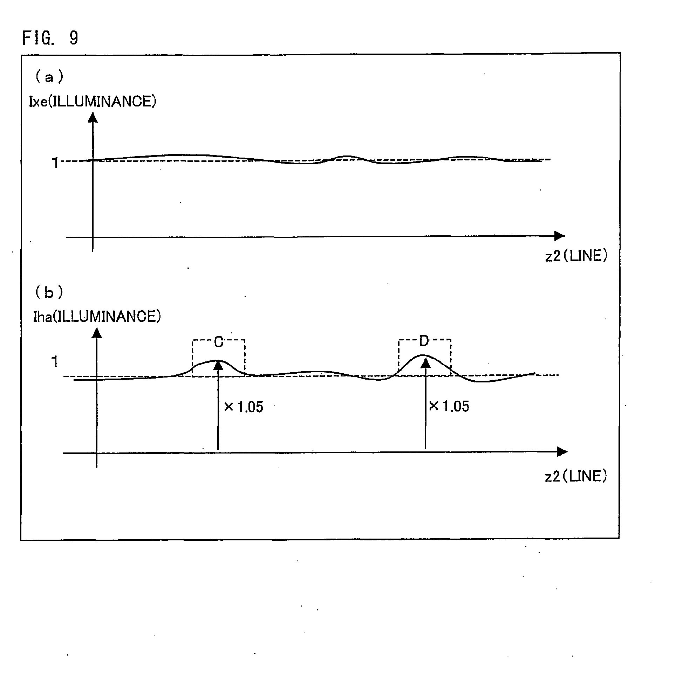

   Fig. 9 is a chart of illuminance distribution obtained on a line z2 of a prism sheet in a case where no transmittance adjusting sheet in accordance with an embodiment of the present invention is used ((a) of Fig. 9 shows a case of xenon light, and (b) of Fig. 9 shows a case of halogen light).
Fig. 10

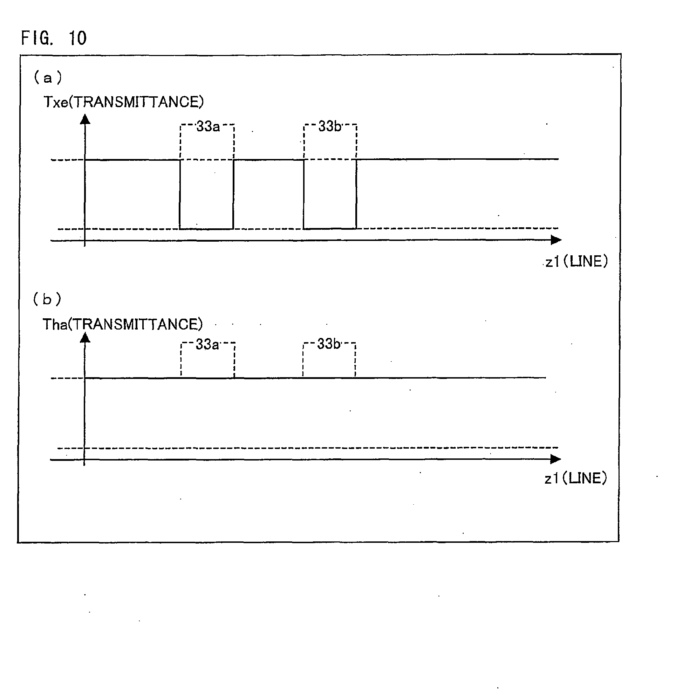

   Fig. 10 shows how a transmittance of a transmittance adjusting sheet changes depending on a line z1 ((a) of Fig. 10 shows a case of xenon light, and (b) of Fig. 10 shows a case of halogen light).
Fig. 11

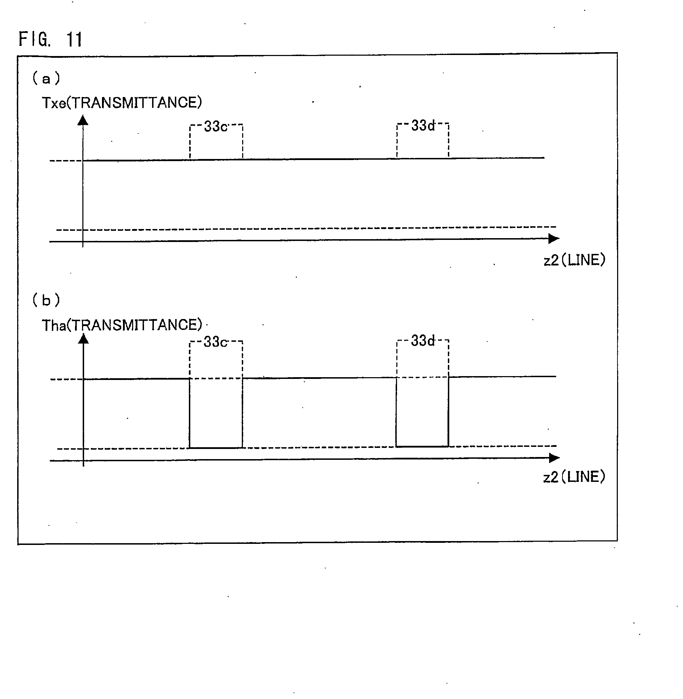

   Fig. 11 shows how a transmittance of a transmittance adjusting sheet changes depending on a line z2 ((a) of Fig. 11 shows a case of xenon light, and (b) of Fig. 11 shows a case of halogen light).
Fig. 12

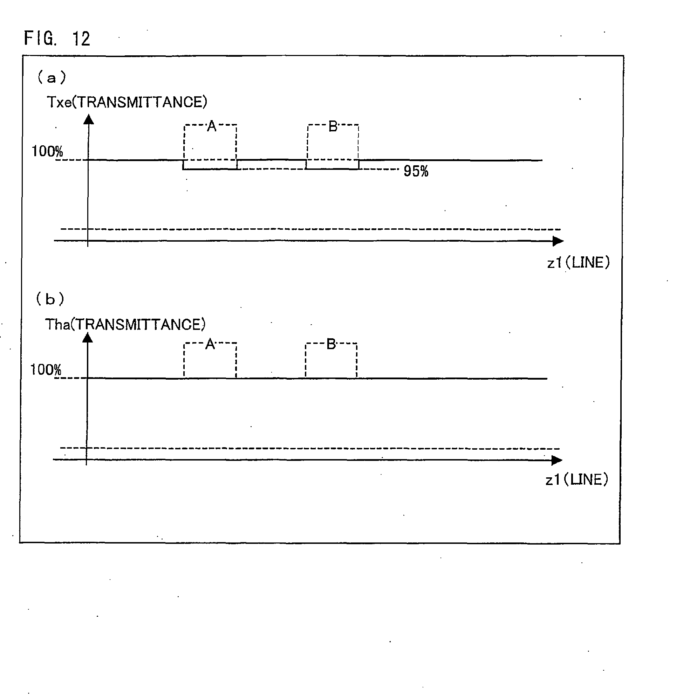

   Fig. 12 is a chart of a transmittance obtained on a line z1 of a prism sheet in a case where a transmittance adjusting sheet in accordance with an embodiment of the present invention is used ((a) of Fig. 12 shows a case of xenon light, and (b) of Fig. 12 shows a case of halogen light).
Fig. 13

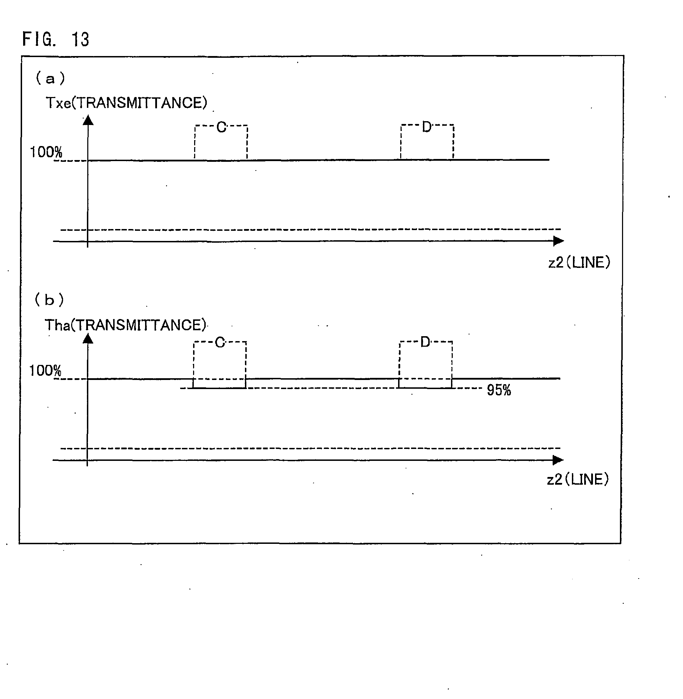

   Fig. 13 is a chart of a transmittance obtained on a line z2 of a prism sheet in a case where a transmittance adjusting sheet in accordance with an embodiment of the present invention is used.
Fig. 14

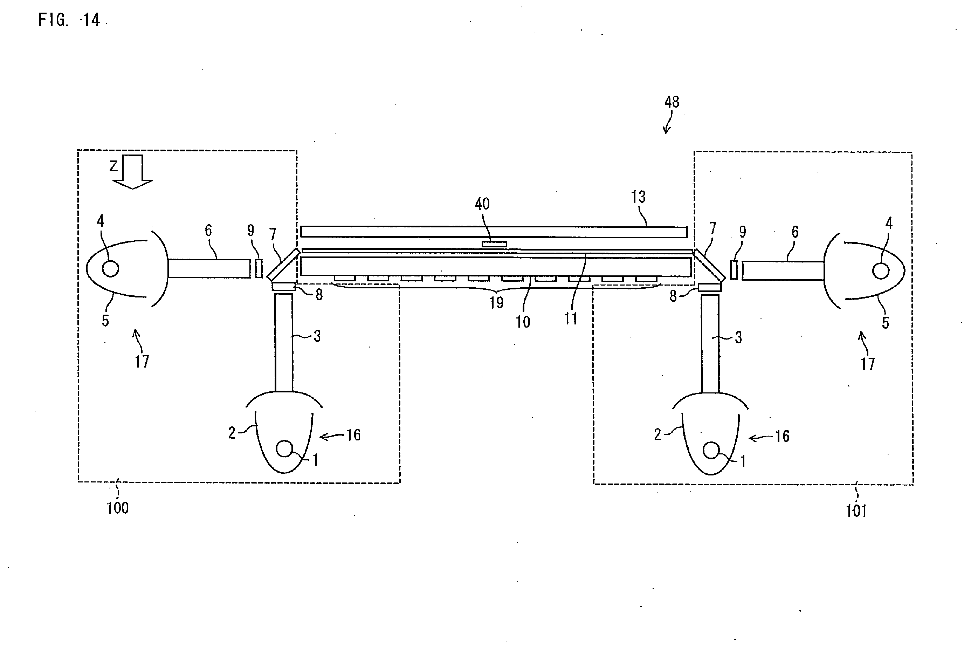

   Fig. 14 shows a major configuration of a further pseudo-sunlight irradiating apparatus in accordance with an embodiment of the present invention.
Fig. 15

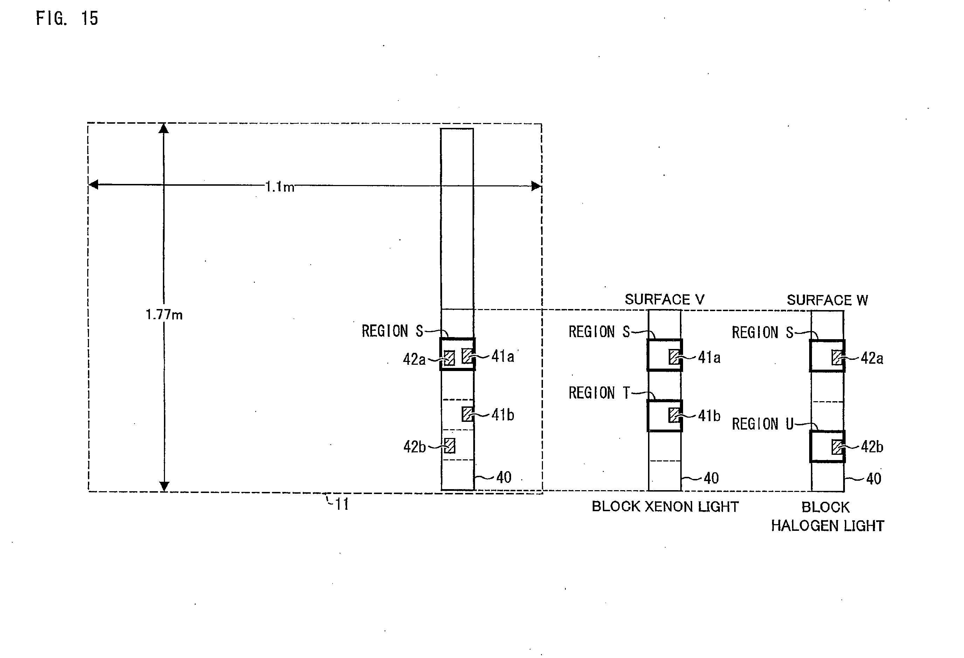

   Fig. 15 shows a configuration of a further transmittance adjusting sheet in accordance with an embodiment of the present invention.
Fig. 16

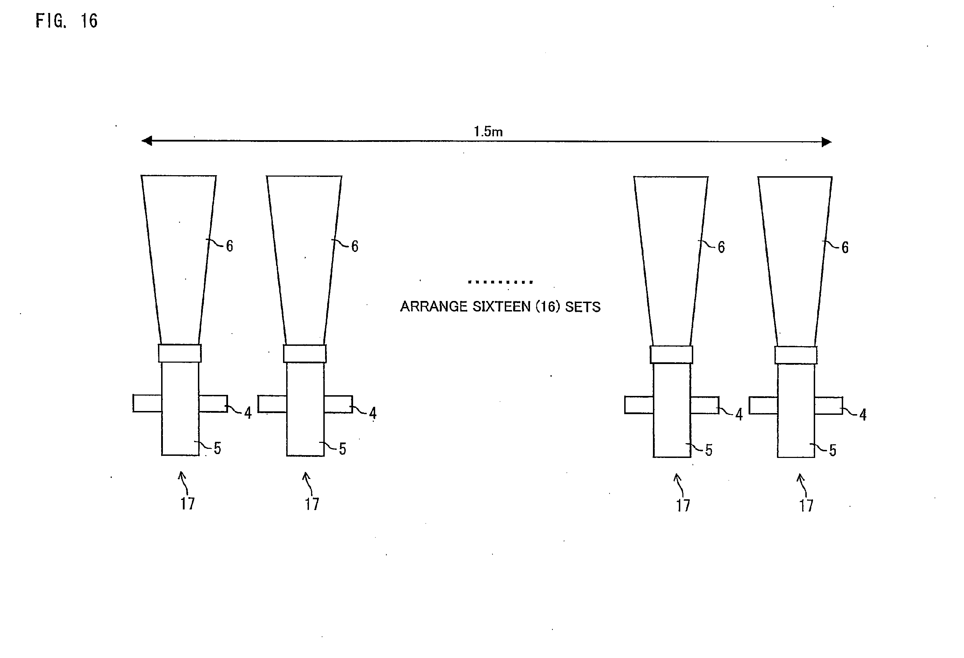

   Fig. 16 is a top view of a plurality of arrayed optical system sets in accordance with an embodiment of the present invention, which top view is obtained in a case where the plurality of arrayed optical system sets are viewed from a direction indicated by an arrow Z shown in Fig. 14.
Fig. 17

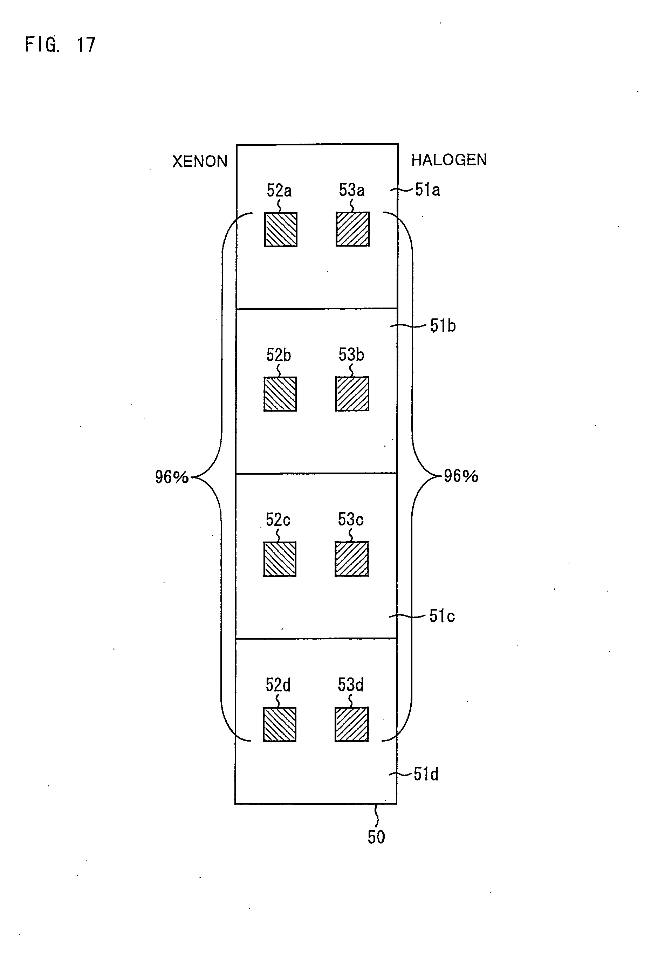

   Fig. 17 shows how a transmittance adjusting sheet is configured in a case where both transmittance of xenon light and transmittance of halogen light are adjusted.
Fig. 18

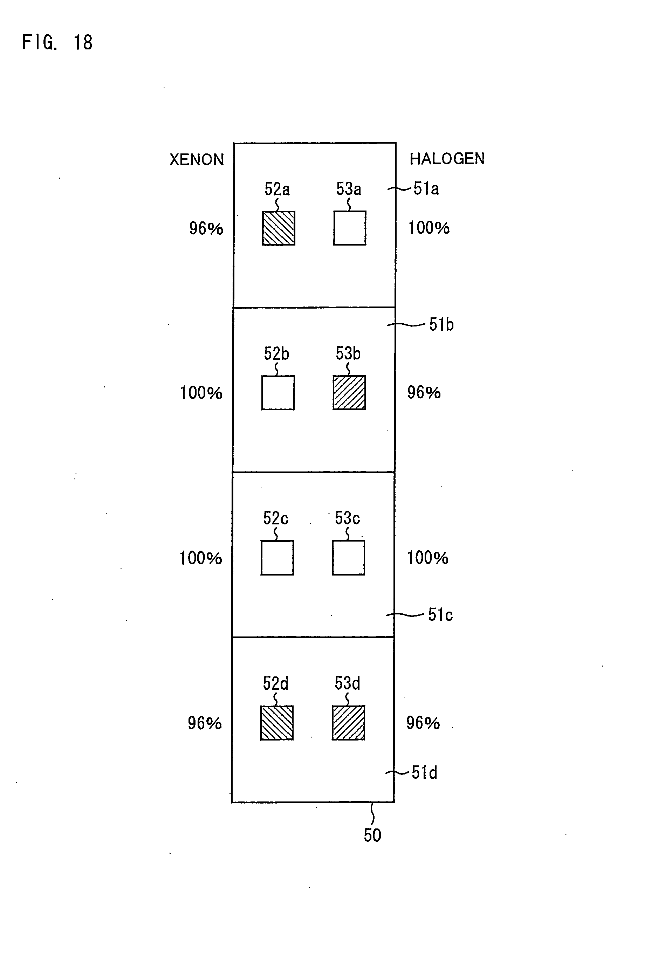

   Fig. 18 shows how a transmittance adjusting sheet is configured in a case where a transmittance of xenon light and a transmittance of halogen light are independently adjusted.

### Description of Embodiments

### [First Embodiment]

### (Configuration of Pseudo-sunlight irradiating apparatus 18)

The following description discusses an embodiment of the present invention with reference to drawings. First, the following description discusses, in detail with reference to Fig. 1, a pseudo-sunlight irradiating apparatus 18 that irradiates an irradiation surface 13 with pseudo sunlight. Fig. 1 shows a major configuration of the pseudo-sunlight irradiating apparatus 18. The pseudo sunlight is a type of artificial light, and has an emission spectrum extremely similar to that of natural light (sunlight). The pseudo-sunlight irradiating apparatus 18 of the present embodiment irradiates the irradiation surface 13 with composite light of xenon light and halogen light as pseudo sunlight. For example, a solar cell is provided in a place where the irradiation surface 13 is located.

As shown in Fig. 1, the pseudo-sunlight irradiating apparatus 18 includes optical system sets 100 and 101, a light guide plate 10 and a prism sheet 11. Each of the optical system sets 100 and 101 includes a xenon light source (first light source) 16 and a halogen light source (second light source) 17. Transmittance adjusting sheets (transmittance adjusting members) 12a through 12c are provided on the prism sheet 11. Fig. 1 shows an example in which there are three places in each of which illuminance unevenness occurs, that is, in each of which a transmittance needs to be adjusted. The transmittance adjusting sheets 12a through 12c are provided on the respective three places in each of which the transmittance needs to be adjusted.

In the xenon light source 16, a xenon lamp 1 is provided in a reflector (first optical member, first converging element) 2. The xenon lamp 1 emits xenon light that has a specific emission spectrum. In the present embodiment, the xenon light source 16 is a tubular light source whose length direction is parallel to a depth direction of a paper surface on which Fig. 1 is illustrated. The pseudo-sunlight irradiating apparatus 18 can have just one (1) xenon light source 16 or a plurality of xenon light sources 16. The reflector 2 has a cross section that is partially elliptical, and converges light that is emitted from the xenon light source 16 toward a light emitting surface. The light emitting surface is attached to one end of a taper coupler (first optical member, first taper converging element) 3. That is, the reflector 2 guides the light that is emitted from the xenon light source 16 directly toward the one end of the taper coupler 3.

In the halogen light source 17, a halogen lamp 4 is provided in a reflector (second optical member, second converging element) 5. The halogen lamp 4 emits halogen light that has a specific emission spectrum. In the present embodiment, the halogen light source 17 is a tubular light source whose length direction is parallel to the depth direction of the paper surface on which Fig. 1 is illustrated. The pseudo-sunlight irradiating apparatus 18 can have just one (1) halogen light source 17 or a plurality of halogen light sources 17. The reflector 5 has a cross section that is partially elliptical, and converges light that is emitted from the halogen light source 17 toward a light emitting surface. The light emitting surface is attached to one end of a taper coupler (second optical member, second taper converging element) 6. That is, the reflector 5 guides the light that is emitted from the halogen light source 17 directly toward the one end of the taper coupler 6.

The taper coupler 3 is made of a light guide, and has a light receiving surface and a light emitting surface that are different in dimension from each other. The taper coupler 3 directs the xenon light that enters the light receiving surface toward the light emitting surface. The taper coupler 3 has a function of changing a radiation directivity of the xenon light that enters the taper coupler 3, while the xenon light is passing through the taper coupler 3. Note that the reflector 2 has a function of giving a directivity to the light that is emitted from the xenon lamp 1. Therefore, the functions of the taper coupler 3 and the reflector 2 make it possible to give a directivity to the light that is emitted from the taper coupler 3.

Similarly, the taper coupler 6 is made of a light guide, and has a light receiving surface and a light emitting surface that are different in dimension from each other. The taper coupler 6 directs the halogen light that enters the light receiving surface toward the light emitting surface. The taper coupler 6 has a function of changing a radiation directivity of the halogen light that enters the taper coupler 6, while the halogen light is passing through the taper coupler 6. Note that the reflector 5 has a function of giving a directivity to the light that is emitted from the halogen lamp 4. Therefore, the functions of the taper coupler 6 and the reflector 5 make it possible to give a directivity to the light that is emitted from the taper coupler 6.

### (Configurations of Xenon Light Source 16 and Halogen Light Source 17)

The following describes configurations of the xenon light source 16 and the halogen light source 17 with reference to Fig. 2. Fig. 2 is a top view of the halogen light source 17, which top view is obtained when the halogen light source 17 is viewed from a direction of an arrow Z of Fig. 1.

As shown in Fig. 2, the taper coupler 6 of the halogen light source 17 is configured so that a width (short axis) of the light guide gradually increases from one end (incident surface of light) to the other end (emitting surface of light). Halogen light that has just entered the incident surface of the taper coupler 6 is emitted in all directions. However, the taper coupler 6 causes the halogen light to be emitted in a single direction, while the halogen light is passing through the taper coupler 6.

Similarly, the taper coupler 3 of the xenon light source 16 is configured so that a width of the light guide gradually increases from one end (incident surface of light) to the other end (emitting surface of light). Xenon light that has just entered the incident surface of the taper coupler 3 is emitted in all directions. However, the taper coupler 3 causes the xenon light to be emitted in a single direction, while the xenon light is passing through the taper coupler 3.

### (Reflection of Xenon Light and Transmittance of Halogen Light)

An optical filter 8 is provided around the other end (the emitting surface) of the taper coupler 3. The optical filter 8 has a transmittance property that is optimized in accordance with an emission spectrum of the xenon light. The optical filter 8 causes an adjustment of the emission spectrum of the xenon light that is emitted from the emitting surface of the taper coupler 3. The xenon light that has passed through the optical filter 8 is directed toward a wavelength selection mirror (light selection element) 7 that is provided so as to be at an angle of 45° with the optical filter 8. Light, having shorter-wavelengths, in xenon light is reflected from the wavelength selection mirror 7, and is then directed toward one end (incident surface) of the light guide plate 10.

Meanwhile, an optical filter 9 is provided around the other end (the emitting surface) of the taper coupler 6. The optical filter 9 has a transmittance property that is optimized in accordance with an emission spectrum of the halogen light. The optical filter 9 causes an adjustment of the emission spectrum of the halogen light that is emitted from the taper coupler 6. The halogen light that has passed through the optical filter 9 is directed toward a wavelength selection mirror 7 that is provided so as to be at an angle of 45° with the optical filter 9. Light, having longer-wavelengths, in halogen light passes through the wavelength selection mirror 7, and is then directed toward one end (incident surface) of the light guide plate 10.

As described above, since the wavelength selection mirror 7 has a selective action, the xenon light and the halogen light are combined and emitted toward the light guide plate 10. Specifically, the wavelength selection mirror 7 selects and combines (i) the light having shorter-wavelengths in the xenon light and (ii) the light having longer-wavelengths in the halogen light, and then directs the light thus combined toward the incident surface of the light guide plate 10, as pseudo sunlight that has a spectrum distribution similar to that of the solar light.

Fig. 3 shows a transmittance property of the wavelength selection mirror 7. Specifically, Fig. 3 shows a transmittance of the wavelength selection mirror 7 obtained in a case where light enters the wavelength selection mirror 7 at an incident angle of 45°. As shown in Fig. 3, the wavelength selection mirror 7 reflects most light whose wavelength is shorter than a boundary wavelength λb, whereas allows most light whose wavelength is longer than the boundary wavelength λb to pass through the wavelength selection mirror 7. The wavelength selection mirror 7 thus has a wavelength dependency, has a maximum transmittance Tmax when receiving the light whose wavelength is longer than the boundary wavelength λb, and has a minimum transmittance Tmin when receiving the light whose wavelength is shorter than the boundary wavelength λb. Note that the boundary wavelength λb is a wavelength in which the wavelength selection mirror 7 has a transmittance of about 50 %. In the present embodiment, the boundary wavelength λb is set to 700 nm, the maximum transmittance Tmax is set to 95 %, and the minimum transmittance Tmin is set to 5 %. Since the wavelength selection mirror 7 thus selects the light, having shorter-wavelengths than 700 nm, in the xenon light, it is possible to remove components of strong bright-lines included in the emission spectrum of the light that is emitted from the xenon light source 16. This brings about an effect of easily designing the optical filter 8.

The pseudo-sunlight irradiating apparatus 18 ultimately emits pseudo sunlight (composite light of xenon light and halogen light) toward the irradiation surface 13 through the prism sheet 11 from the surface of the light guide plate 10. At the time of emission, the pseudo-sunlight irradiating apparatus 18 uses scattering (reflection) mechanism that is provided on the surface of the light guide plate 10 which surface is opposite to a side where the irradiation surface 13 is provided. According to the present embodiment, a plurality of scatterers (light extraction means) 19 each of which has a light-reflecting property are provided in line on the surface of the light guide plate 10 which surface is opposite to the side where the irradiation surface 13 is provided. Light that enters the light guide plate 10 is scattered (reflected) by the plurality of scatterers 19, and is emitted from the light guide plate 2. The light thus emitted is directed toward the prism sheet 11, is refracted toward the irradiation surface 13 by the prism sheet 11, and then irradiates the irradiation surface 13. Note that, though the xenon light and the halogen light separately enter the light guide plate 10, the xenon light and the halogen light are combined in the light guide plate 10, and the composite light of the xenon light and the halogen light is emitted toward the irradiation surface 13.

In the present embodiment, the scatterers 19 are provided on the light guide plate 10. The present embodiment is not limited to this. Instead of providing the scatterers 19, the light guide plate 10 can have a surface which has concavities and convexities, for example. Such concavities and convexities can be achieved by forming a plurality of lumps made of beaded ink on the surface of the light guide plate 10. The plurality of lumps serve as the scatterers that scatter light.

It is generally possible to improve uniformity of illuminance to some extent by adjusting intervals and shapes of the scatterers. Note, however, that these intervals and shapes should be primarily optimized in accordance with a radiation directivity of light that enters the light guide plate 10. Therefore, in a case where two types of light (xenon light and halogen light) that have respective radiation directivities different from each other enter the light guide plate 10, it is difficult to optimize the intervals and shapes of the scatterers in accordance with both the radiation directivity of the xenon light and the radiation directivity of the halogen light.

Accordingly, in a case where both the xenon light and the halogen light enter the light guide plate 10, there occurs unevenness in light that is irradiated toward the irradiation surface 13 from the light guide plate 10, even if arrangement and the intervals and the like of the scatterers are controlled (optimized). Therefore, if the light (composite light) enters the light guide plate 10, then there will occur unevenness in the light that is irradiated toward the irradiation surface 13 from the light guide plate 10, and the light will not become uniform. In view of the circumstances, the present embodiment is configured so that the light that has been emitted from the light guide plate 10 is emitted toward the irradiation surface 13 through the prism sheet 11 having the transmittance adjusting sheets 12a through 12c. The transmittance adjusting sheets 12a through 12c that are provided on the prism sheet 11 can suppress illuminance unevenness of the light that is emitted from the light guide plate 10. This will be described below in detail.

### (Configurations of Transmittance Adjusting Sheets 12a through 12c)

As described above, the transmittance adjusting sheets 12a through 12c are provided on an irradiation surface 13 side of the prism sheet 11. Each of the transmittance adjusting sheets 12a through 12c has a transmittance different from that of the prism sheet 11, and is provided in a region, on the irradiation surface 13 of the pseudo-sunlight irradiating apparatus 18, where illuminance unevenness occurs, that is, where the transmittance needs to be adjusted. In the present embodiment, three transmittance adjusting sheets 12a through 12c are provided. However, the number of the transmittance adjusting sheets 12a through 12c are determined in accordance with the number of regions in each of which a transmittance needs to be adjusted which regions are on the irradiation surface 13.

According to the optical system sets 100 and 101 that direct light toward the light guide plate 10, the members such as the taper couplers 3 and 6 cause each light that enters the light guide plate 10 to have a corresponding directivity. In view of the directivity, it is possible to estimate where the light emitted from the light guide plate 10 reaches on the irradiation surface 13 (prism sheet 11). This makes it possible to (i) easily determine at least where the transmittance adjusting sheets 12a through 12c should be provided. As such, it is possible to easily adjust the transmittance by use of the transmittance adjusting sheets 12a through 12c.

Fig. 4 shows how the transmittance adjusting sheets 12a through 12c are configured. As shown in Fig. 4, multilayer films, having a wavelength selectivity, are provided on a light emitting side of the transmittance adjusting sheets 12a through 12c. Specifically, the multilayer films each having such a wavelength selectivity are provided in regions 22 (hereinafter referred to as wavelength selection film regions) on the respective transmittance adjusting sheets 12a through 12c. Each of the wavelength selection film regions 22 has at least one of openings 21 a through 21e. According to the transmittance adjusting sheets 12a through 12c, the transmittance of each of the transmittance adjusting film region (transmittance adjusting regions) 22 is adjusted by changing areas of at least one of the openings 21a through 21e.

The following describes in detail how the transmittance is adjusted. First, the following description discusses a property of the wavelength selection film region 22, with reference to Fig. 5. Fig. 5 shows transmittances of the light which enters the wavelength selection film region 22 at an incident angle ranging from 0° to 45°. A full line 20 of Fig. 5 represents a transmittance of the light that enters the wavelength selection film region 22 at an angle of 0°, and an alternate long and short dash line 30 of Fig. 5 represents a transmittance of the light that enters the wavelength selection film region 22 at an angle of 45°.

As is clear from Fig. 5, the wavelength selection film region 22 is made of a multilayer film that has a property A in which most light, whose wavelength is shorter than a boundary wavelength λb', passes through the wavelength selection film region 22 and most light, whose wavelength is longer than the boundary wavelength λb', is reflected from the wavelength selection film region 22. The wavelength selection film region 22 thus has a wavelength dependency, has a maximum transmittance Tmax when receiving the light whose wavelength is shorter than the boundary wavelength λb', and has a minimum transmittance Tmin when receiving the light whose wavelength is longer than the boundary wavelength λb'. Note that the boundary wavelength λb' is a wavelength in which the wavelength selection film region 22 has a transmittance of about 50 %. In the present embodiment, the boundary wavelength λb' is set to 700 nm, the maximum transmittance Tmax is set to 95 %, and the minimum transmittance Tmin is set to 5 %.

Note that a property similar to the property A also can be obtained by use of a colored glass that has a transmittance property identical or similar to that of the wavelength selection film region 22. For example, it is possible to use a colored glass such as BG38 or BG18 that is manufactured by SCHOTT AG, in a case where xenon light, whose wavelength is shorter than the boundary wavelength λb', passes through the wavelength selection film region 22 so as to have the maximum transmittance Tmax of 95 % as shown in the property A of Fig. 5. As is clear from the alternate long and short dash line 30 of Fig. 5, the boundary wavelength λb' shifts toward a longer wavelength in a case where the light enters the wavelength selection film region 22 at an incident angle of 45° than in a case where the light enters the wavelength selection film region 22 at an incident angle of 0°. However, it is possible to make small a shift amount of the boundary wavelength λb' with the use of the colored glass, which shift amount occurs when the light enters the wavelength selection film region 22 at an incident angle ranging from 0° to 45°. This brings about an effect of attaining a more stable transmittance property.

Similarly, it is possible to use a colored glass such as RG665 or RG 695 that is manufactured by SCHOTT AG, in a case where halogen light, whose wavelength is longer than the boundary wavelength λb', passes through the wavelength selection film region 22 so as to have the maximum transmittance Tmax of 95 % as shown in a property B of Fig. 5.

As described above, the wavelength selection film region 22 serves as a light shielding region where light, whose wavelength is longer than the boundary wavelength λb' in the light that has entered the wavelength selection film region 22, is blocked off. Therefore, according to the present embodiment, the halogen light cannot pass through the wavelength selection film region 22. This is used in the present embodiment to adjust illuminance unevenness caused by the pseudo-sunlight irradiating apparatus 18. Specifically, the transmittance of the halogen light that passes through the transmittance adjusting film region 22 is adjusted, by adjusting a size of at least one of the openings 21a through 21e which the transmittance adjusting sheets 12a through 12c have. Each of the openings 21a through 21e can have one of five sizes (a through e). That is, each of the openings 21a through 21e can be adjusted to have one of the five sizes. As the openings 21a through 2 1 e of the transmittance adjusting sheets 12a through 12c increase in size, the transmittance of the halogen light that passes through the transmittance adjusting sheets 12a through 12c gets higher (because the halogen light passes through the openings 21a through 21e). Therefore, it is possible to determine the sizes of the openings 21a through 2 1 e in accordance with a degree of illuminance unevenness on the irradiation surface 13. In other words, what has to be done is that the sizes of the openings 21a through 21e are adjusted such that the transmittance of the halogen light that passes through the transmittance adjusting sheets 12a through 12c has a desired transmittance. For example, the transmittance of the light (halogen light) whose wavelength is 700 nm or longer is 81 %, in a case where (i) the wavelength selection film region 22 has the property A (in which a maximum transmittance Tmax is 95 % in the case where wavelength is 700 nm or shorter and a minimum transmittance Tmin is 5 % in the case where wavelength is longer than 700 nm) and (ii) the open area ratio of the wavelength selection film region 22 is 80 %. Further, in a case where the open area ratio of the wavelength selection film region 22 is 70 %, the transmittance of the halogen light whose wavelength is 700 nm or longer is 71.5 %.

Even if the open area ratio is 80 % in the wavelength selection film region 22 in which (i) a maximum transmittance Tmax is 95 % in the case where wavelength is 700 nm or shorter and (ii) a minimum transmittance Tmix is 20 % in the case where the wavelength is longer than 700 nm, the transmittance of the halogen light is 84 %. Therefore, it is possible to carry out a transmittance adjustment which is more sensitive to a change in the open area ratio in the case where a minimum transmittance Tmin in the wavelength selection film region 22 is 5 % than in the case where a minimum transmittance Tmin in the wavelength selection film region 22 is 20 %.

Further, in the wavelength selection film region 22 in which (a) a maximum transmittance Tmax is 80 % in the case where the wavelength is 700 nm or shorter and (b) a minimum transmittance Tmin is 5 % in the case where the wavelength is 700 nm or longer, a transmittance of the light (xenon light) whose wavelength is 700 nm or shorter is 80 %, even if the open area ratio is 80 % and the transmittance of the halogen light is 81 %. Therefore, there causes no difference in transmittances between the xenon light and the halogen light. This makes it impossible to adjust the transmittance of the xenon light and the transmittance of the halogen light. As a result, it is preferable, in the wavelength selection film region 22 which has the property A of Fig. 5, that (i) the light whose wavelength is shorter than the boundary wavelength λb' has a maximum transmittance Tmax of 90 % and (ii) the light whose wavelength is longer than the boundary wavelength λb' has a minimum transmittance Tmin of 10 % or less.

Even if the light enters the wavelength selection film region 22 at an incident angle ranging from 0° to 45°, a transmittance adjusting performance can be maintained in the transmittance adjusting film region 22. Therefore, even if a directivity of the light that enters the irradiation surface 13 is increased up to an angle of 45° at which a solar cell effectively generates electric power, it is still possible to adjust illuminance of the radiation surface 13. This causes a reduction in constraint in providing the optical system sets 100 and 101 that direct light toward the light guide plate 10, and therefore it is possible to suppress the amount of light that falls a sacrifice to obtaining of the above directivity.

Note that the wavelength selection film region 22 may have the property B shown in Fig. 5. The property B is a property in which (i) the light whose wavelength is shorter than the boundary wavelength λb' is reflected and (ii) the light whose wavelength is longer than the boundary wavelength λb' passes through. That is, the halogen light passes through and the xenon light is blocked off, in the wavelength selection film region 22. It is thus possible to select the wavelength selection film region 22 that has one of the two properties in accordance with wavelengths of the light whose transmittance should be adjusted.

Accordingly, the following two types of wavelength selection films can be adopted as a wavelength selection film of the wavelength selection film region 22 in accordance with the present embodiment. One of the two types is a wavelength selection film that adjusts a transmittance of light whose wavelength (350 nm to 700 nm) is shorter than the boundary wavelength λb' (700 nm). Such a wavelength selection film is used in a case of merely adjusting a transmittance of the light that is emitted from the xenon lamp 1. The other of the two types is a wavelength selection film that adjusts a transmittance of light whose wavelength (700 nm to 1100 nm) is longer than the boundary wavelength λb' (700 nm). Such a wavelength selection film is used in a case of merely adjusting a transmittance of the light that is emitted from the halogen lamp 2. As described above, the wavelength selection film region 22 can be made of any one of the two types of wavelength selection films. The present embodiment is, however, not limited to this. For example, each of the transmittance adjusting sheets 12a through 12c can have a double-layered structure (two layers) in which two types of wavelength selection films are provided. Specifically, a wavelength selection film region 22 that has the property A is provided in one of the two layers and another wavelength selection film region 22 that has the property B is provided in the other of the two layers. This structure makes it possible to adjust the transmittance of the xenon light and the transmittance of the halogen light. Note that, in a case where (i) each of the transmittance adjusting sheets 12a through 12c has the double-layered structure and (ii) the xenon light and the halogen light are simultaneously adjusted, the wavelength selection film region 22 that has the property A and the wavelength selection film region 22 that has the property B should be provided so as to overlap each other. In contrast, in a case where any one of the xenon light and the halogen light is adjusted, (i) the wavelength selection film region 22 that has the property A and (ii) the wavelength selection film region 22 that has the property B should be provided so as not to overlap each other.

In the present embodiment, the boundary wavelength λb' of the wavelength selection film region 22 is equal to the boundary wavelength λb of the wavelength selection mirror 7. This is because of the following reason. Namely, the illuminance unevenness on the irradiation surface 13 is caused by provision of the two types of light sources (the xenon lamp 1 and the halogen lamp 2) that are different from each other, and therefore it is necessary to adjust illuminance in accordance with light that is emitted from each of the two types of light sources. Accordingly, in a case where the boundary wavelength λb of the wavelength selection mirror 7 is 700 nm, the boundary wavelength λb' of the wavelength selection film region 22 is also set to 700 nm.

Note that the boundary wavelength λb is not necessarily identical to the boundary wavelength λb'. For example, in a case where the light emitted from each of the two types of light sources is given a directivity by a corresponding one of the reflectors 2 and 5, a specific spread angle is left in the light. It is possible to reduce the spread angle close to zero by simply increasing the size of the device so that the device achieves parallel light. This, however, is not practical. In order to achieve reducing the device in size, the light cannot help having the specific spread angle. In the case where the light have the specific spread angle, a change in a transmittance with respect to an incident angle at which the light enters the wavelength selection mirror 7 is asymmetric between (i) a case where the light enters the wavelength selection mirror 7 at an incident angle of larger than 45° and (ii) a case where the light enters the wavelength selection mirror 7 at an incident angle of smaller than 45°. Therefore, it is necessary to adjust the boundary wavelength λb' of the transmittance adjusting region 22 in accordance with (i) a degree of spread of an incident angle range in which the light enters the wavelength selection mirror 7 and (ii) a degree of spread of an incident angle range in which the light enters the light guide plate 10. In this case, the boundary wavelength λb' needs to be adjusted in the range of ± 50 nm in accordance with the property of the wavelength selection film.

According to the configuration, since the transmittance adjusting sheets 12a through 12c are provided, it is possible to adjust the transmittance of the xenon light or the halogen light in regions where the transmittance adjusting sheets 12a through 12c are provided. Therefore, by providing the transmittance adjusting sheets 12a through 12c in a region where illuminance unevenness occurs, that is, where a transmittance needs to be adjusted, the transmittance can be adjusted. This allows a uniform illuminance distribution. In other words, it is possible to suppress illuminance unevenness of light that enters the irradiation surface 13.

According to the present embodiment, the multilayer film, each layer having the property A or the property B, is provided, as a wavelength selection film, in the wavelength selection film region 22. This makes it possible to independently adjust the transmittance of the xenon light and the transmittance of the halogen light. Note that both the multilayer film (or colored glass) that has the property A and the multilayer film (or colored glass) that has the property B can be used together. Therefore, even if a region where the transmittance of the xenon light needs to be adjusted and a region where the transmittance of the halogen light needs to be adjusted coexist on the irradiation surface 13, the transmittance of the xenon light and the transmittance of the halogen light can be independently and precisely adjusted. It is thus possible to simultaneously adjust the transmittance of the xenon light and the transmittance of the halogen light.

Furthermore, since the transmittance adjusting sheets 12a through 12c are provided, as needed, in a region where illuminance unevenness occurs, that is, in a region where the transmittance needs to be adjusted, it is possible to appropriately adjust the illuminance unevenness of a pseudo-sunlight irradiating apparatus 28. Further, even in a case where a degree of the illuminance unevenness differs from region to region, it is possible to adjust the illuminance unevenness in accordance with the degree of the illuminance unevenness by adjusting areas of the openings 21a through 21e.

### (A plurality of Optical System Sets)

As shown in Fig. 1, the pseudo-sunlight irradiating apparatus 18 includes two of the optical system sets 100 and 101 each including the xenon light source 16 and the halogen light source 17. The optical system set 100 is provided in one end (left side of Fig. 1) of a housing of the pseudo-sunlight irradiating apparatus 18, and the optical system set 101 is provided in the other end (right side of Fig. 1) of the housing of the pseudo-sunlight irradiating apparatus 18. Light emitted from the optical system set 100 enters one end of the light guide plate 10, and light emitted from the optical system set 101 enters the other end of the light guide plate 10. This allows a further increase in intensity of the pseudo sunlight that is emitted from the pseudo-sunlight irradiating apparatus 18. This also allows an increase in performance which causes uniformity of illuminance of the irradiation surface 13.

In one of the optical system sets 100 and 101, the xenon light source 16 and the halogen light source 17 may be provided in positions opposite to those shown in Fig. 1. In this case, the wavelength selection mirror 7 (i) reflects light, having longer-wavelengths, in the halogen light that is emitted from the optical filter 6 and directs such light toward the light guide plate 10, and (ii) causes light, having shorter-wavelengths, in the xenon light that is emitted from the optical filter 3 to pass through and directs such light toward the light guide plate 10. It follows that the wavelength selection mirror 7 should have a property which causes (i) the light, having shorter-wavelengths, in the xenon light to pass through and (ii) the light, having longer-wavelengths, in the halogen light to be reflected.

The present embodiment is, however, not necessarily limited to this. The pseudo-sunlight irradiating apparatus 18 can include at least one of the optical system sets 100 and 101.

### (Second Embodiment)

### (Configuration of Pseudo-sunlight irradiating apparatus 38)

The following describes another embodiment of the present invention with reference to drawings. In a pseudo-sunlight irradiating apparatus of the present embodiment, illuminance adjusting members are made up of two types of transmittance adjusting sheets. Fig. 6 shows a main configuration of a pseudo-sunlight irradiating apparatus 38 of the present embodiment. As shown in Fig. 6, the pseudo-sunlight irradiating apparatus 38 includes optical system sets 100 and 101 each including a xenon light source 16 and a halogen light source 17, a light guide plate 10 and a prism sheet 11. A transmittance adjusting sheet (transmittance adjusting member) 31 and a transmittance adjusting sheet (transmittance adjusting member) 32a provided on the transmittance adjusting sheet 31 are provided, between the prism sheet 11 and an irradiation surface 13, so that the transmittance adjusting sheet (transmittance adjusting member) 32a is closer to the irradiation surface 13. The following description discusses in detail the transmittance adjusting sheets 31 and 32a. Note that members (the optical system sets 100 and 101, the light guide plate 10 and the prism sheet 11) other than the transmittance adjusting sheets 31 and 32a are identical to those of First Embodiment.

Fig. 7 shows how the transmittance adjusting sheets 31 and 32a are configured. Specifically, Fig. 7 shows an example in which there are four regions in each of which illuminance unevenness occurs, that is, a transmittance needs to be adjusted. The four regions are represented as respective regions A, B, C and D.

As shown in Fig. 7, the transmittance adjusting sheet 31 is made of a transparent member such as a large glass (float glass), and adjusts illuminance of light that is emitted from a xenon lamp 1. The transmittance adjusting sheet 31 has transmittance adjusting regions (first transmittance adjusting regions) 33a and 33b (regions A and B) in each of which a transmittance is adjusted. The transmittance adjusting sheet 32a is a small member that can be provided on the transmittance adjusting sheet 31, and adjusts illuminance of light that is emitted from a halogen lamp 2. The transmittance adjusting sheet 32a has transmittance adjusting regions (second transmittance adjusting regions) 33c and 33d (regions C and D) in each of which a transmittance is adjusted. A minimum region necessary for adjusting a transmittance is a square of side 20 mm. A minimum region of each of the regions A, B, C and D shown in Fig. 6 is a square of side 20 mm.

The following describes an illuminance distribution of the pseudo-sunlight irradiating apparatus 38 with reference to Figs. 8 and 9. Fig. 8 is a view illustrating how illuminance distributes on a line z1 of a prism sheet 11 in a case where no transmittance adjusting sheet 31 is provided ((a) of Fig. 8 represents the xenon light, and (b) of Fig. 8 represents the halogen light). Fig. 9 is a view illustrating how illuminance distributes on a line z2 of a prism sheet 11 in a case where no transmittance adjusting sheet 32a is provided ((a) of Fig. 9 represents the xenon light, and (b) of Fig. 9 represents the halogen light).

In the present embodiment, in the case where no transmittance adjusting sheet 31 is provided, the illuminance is distributed on the line z1 of the prism sheet 11 (see Fig. 8). As shown in (a) of Fig. 8, illuminance Ixe of the xenon light in the regions A and B is about 5 % higher than those in the other regions. In contrast, illuminance Iha of the halogen light has no unevenness (see (b) of Fig. 8).

Further, in the present embodiment, in the case where no transmittance adjusting sheet 32a is provided, illuminance is distributed on the line z2 of the prism sheet 11 (see Fig. 8). As shown in (a) of Fig. 9, illuminance Ixe of the xenon light has no unevenness. In contrast, illuminance Iha of the halogen light in the regions C and D is about 5 % higher than those in the other regions (see (b) of Fig 9).

### (Configurations of Transmittance Adjusting Sheets 31 and 32a)

In the present embodiment, in order to suppress illuminance unevenness in each of the regions A, B, C and D, the transmittance adjusting sheets 31 and 32a are provided. The following description discusses the transmittance adjusting sheets 31 and 32a with reference to Figs. 10 through 13. Fig. 10 shows how a transmittance of the transmittance adjusting sheet 31 distributes on the line z1 ((a) of Fig. 10 represents the xenon light, and (b) of Fig. 10 represents the halogen light). Fig. 11 shows how a transmittance of the transmittance adjusting sheet 32a distributes on the line z2 ((a) of Fig. 11 represents the xenon light, and (b) of Fig. 11 represents the halogen light). Fig. 12 shows how a transmittance of the transmittance adjusting sheet 31 distributes on the line z1 of the prism sheet 11 ((a) of Fig. 12 represents the xenon light, and (b) of Fig. 12 represents the halogen light). Fig. 13 shows how a transmittance of the transmittance adjusting sheet 32a distributes on the line z2 of the prism sheet 11.

There are provided, on the transmittance adjusting regions 33a and 33b of the transmittance adjusting sheet 31, multilayer films that have a property (wavelength dependency) in which the xenon light hardly passes through (see (a) of Fig. 10). As is clear from (b) of Fig. 10, the multilayer films have a property (see the property B of Fig. 5) in which most of the halogen light pass through. Further, there are provided, on the transmittance adjusting regions 33c and 33d of the transmittance adjusting sheet 32a, multilayer films that have a property (wavelength dependency) in which the halogen light hardly passes through (see (b) of Fig. 11). As is clear from (a) of Fig. 11, the multilayer films have a property (see the property A of Fig. 5) in which most of the xenon light pass through. Note that areas of the respective transmittance adjusting regions 33a through 33d account for 5% of the respective regions A, B, C and D.

As a result, transmittances of the respective regions A, B, C and D are as shown in Figs. 11 and 12. The areas of the respective transmittance adjusting regions 33a and 33b account for 5% of the respective regions A and B. Therefore, as shown in (a) of Fig. 12, a transmittance Txe of the xenon light in the regions A and B decreases to 95 % from 100 %. However, as shown in (b) of Fig. 12, a transmittance Tha of the halogen light has no change. Similarly, the areas of the respective transmittance adjusting regions 33c and 33d account for 5% of the respective regions C and D. Therefore, as shown in (b) of Fig. 13, a transmittance Tha of the halogen light in the regions C and D decreases to 95 % from 100 %. However, as shown in (a) of Fig. 13, a transmittance Txe of the xenon light has no change.

As described above, the provision of the transmittance adjusting regions 33a through 33d causes a reduction, by 5%, in the transmittance Txe of the xenon light in the regions A and B, and also causes a reduction, by 5%, in the transmittance Tha of the halogen light in the regions C and D. This causes a reduction, by about 5%, in the illuminance Ixe of the xenon light in the regions A and B, and also causes a reduction, by about 5%, in the illuminance Iha of the halogen light in the regions C and D. That is, the illuminance of the pseudo-sunlight irradiating apparatus 38 can uniformly distributes. It is therefore possible to suppress illuminance unevenness of the light that enters the irradiation surface 13. The present embodiment includes the transmittance adjusting sheet 31 that adjusts the transmittance Txe of the xenon light and the transmittance adjusting sheet 32a that adjusts the transmittance Tha of the halogen light. It is therefore possible to independently adjust the transmittance Txe and the transmittance Tha even if a region where the transmittance Txe of the xenon light needs to be adjusted and a region where the transmittance Tha of the halogen light needs to be adjusted coexist on the irradiation surface 13. It is thus possible to simultaneously adjust the transmittance of the xenon light and the transmittance of the halogen light.

Further, since the transmittance adjusting regions 33a through 33d are provided, as needed, in a region where illuminance unevenness occurs, that is, in a region where the transmittance needs to be adjusted, it is possible to appropriately adjust the illuminance unevenness of a pseudo-sunlight irradiating apparatus 38. Furthermore, even in a case where a degree of the illuminance unevenness differs from region to region, it is possible to adjust illuminance unevenness in accordance with the degree of the illuminance unevenness by adjusting areas of the transmittance adjusting regions 33a through 33d.

Note that it is preferable that a multilayer film, which serves as an antireflection film for both the xenon light and the halogen light, is provided in a region other than the transmittance adjusting regions 33a through 33d of the transmittance adjusting sheets 31 and 32a. Since such an antireflection film is provided, it is possible to suppress a reduction in the amount of light that attenuates during passing through the region other than the transmittance adjusting regions 33a through 33d. Specifically, in a case where no antireflection film is provided, a maximum transmittance in the region other than the transmittance adjusting regions 33a through 33d is substantially 92 %. In contrast, the provision of the antireflection film makes it possible to increase, up to 98 % or more, the maximum transmittance in the region other than the transmittance adjusting regions 33a through 33d.

### (Increase Transmittance Adjusting Region in Number)

The present embodiment can also easily deal with a case where the transmittance adjusting regions need to be later increased in number. For example, in a case where the transmittance adjusting sheet 31 has a region where the transmittance Txe of the xenon light needs to be adjusted, what has to be done is to newly add, on the transmittance adjusting sheet 31, another transmittance adjusting region 33e (see Fig. 7). In a case where the transmittance adjusting sheet 31 has a region where the transmittance Tha of the halogen light needs to be adjusted, what has to be done is to newly add, on the transmittance adjusting sheet 31, a transmittance adjusting sheet 32b having a transmittance adjusting region 33f (see Fig. 7). This allows a transmittance adjusting region to be newly added as appropriate.

### (Third Embodiment)

### (Configuration of Pseudo-sunlight irradiating apparatus 48)

The following describes a further embodiment of the present invention with reference to drawings. It is preferable that the number of the transmittance adjusting sheets on the prism sheet 11 is smaller. This is because, as the number becomes smaller, (i) the number of the constituents of the pseudo-sunlight irradiating apparatuses 18 or 38 becomes smaller and (ii) the distance between the irradiation surface 13 and the transmittance adjusting sheet becomes shorter. Therefore, a pseudo-sunlight irradiating apparatus of the present embodiment has just a single transmittance adjusting sheet. Fig. 14 shows a main configuration of a pseudo-sunlight irradiating apparatus 48 of the present embodiment. As shown in Fig. 14, the pseudo-sunlight irradiating apparatus 48 includes optical system sets 100 and 101 each including a xenon light source 16 and a halogen light source 17, a light guide plate 10 and a prism sheet 11. A transmittance adjusting sheet 40 is provided, between the prism sheet 11 and an irradiation surface 13, so that the transmittance adjusting sheet 40 is closer to the irradiation surface 13. The following description discusses in detail the transmittance adjusting sheet 40. Note that members (the optical system sets 100 and 101, the light guide plate 10 and the prism sheet 11) other than the transmittance adjusting sheet 40 are identical to those of First Embodiment.

Fig. 15 shows how the transmittance adjusting sheet 40 is configured. Specifically, Fig. 15 shows an example in which there are three regions in each of which illuminance unevenness occurs, that is, a transmittance needs to be adjusted. The three regions are represented as respective regions S, T and U. Each of regions S, T and U is a 20-mm-square.

As shown in Fig. 15, the transmittance adjusting sheet 40 has two different surfaces, i.e., a surface V and a surface W. Transmittance adjusting regions 41a and 41b are provided on the surface V, and transmittance adjusting regions 42a and 42d are provided on the surface W.

The following describes illuminance distribution of the pseudo-sunlight irradiating apparatus 48. As described above, the regions S, T and U are regions in each of which the transmittance needs to be adjusted. In the regions S, both illuminance of the xenon light and illuminance of the halogen light are high. Specifically, the illuminance of the xenon light and the illuminance of the halogen light in the respective regions S are about 5% higher than those in the other regions. Further, in the region T, illuminance of the xenon light is high. Specifically, the illuminance of the xenon light in the region T is about 5% higher than those in the other regions. Furthermore, in the region U, illuminance of the halogen light is high. Specifically, the illuminance of the halogen light in the region U is about 5 % higher than those in the other regions.

### (Configuration of Transmittance Adjusting Sheet 40)

In view of the circumstances, the present embodiment employs the transmittance adjusting sheet 40 so as to suppress illuminance unevenness in each of the regions S, T and U. The following describes the transmittance adjusting sheet 40 in detail.

As described above, in the regions S, both the illuminance of the xenon light and the illuminance of the halogen light are high. Therefore, the regions S are in a situation in which both the transmittance of the xenon light and the transmittance of the halogen light need to be adjusted simultaneously. If the configuration of Second Embodiment is applied to such a situation, two transmittance adjusting sheets (transmittance adjusting sheets 31 and 32a) need to be stacked. However, the more the number of the transmittance adjusting sheets is, the less the amount of light that passes through the transmittance adjusting sheets is. In view of the circumstances, a multilayer film (property A of Fig. 5), which has a property (wavelength dependency) in which the xenon light hardly passes through, is provided on the transmittance adjusting region 41a of the region S on the surface V of the transmittance adjusting sheet 40. Further, a multilayer film (property B of Fig. 5), which has a property (wavelength dependency) in which the halogen light hardly passes through, is provided on the transmittance adjusting region 42a of the region S on the surface W of the transmittance adjusting sheet 40. Furthermore, a multilayer film that has the property A is provided on the transmittance adjusting region 41b of the region T on the surface V of the transmittance adjusting sheet 40, and a multilayer film that has the property B is provided on the transmittance adjusting region 42b of the region U on the surface W of the transmittance adjusting sheet 40. Note that each area of the transmittance adjusting regions 41a, 41b, 42a and 42b accounts for 5% of a corresponding one of the regions S, T and U.

The transmittance adjusting region 41a that accounts for 5 % of the region S is provided in the S region on the surface V. Therefore, the transmittance of the xenon light decreases to 95 % from 100 %. Further, the transmittance adjusting region 42a that accounts for 5 % of the region S is provided in the S region on the surface W. Therefore, the transmittance of the halogen light decreases to 95 % from 100 %. Similarly, the transmittance adjusting region 41b that accounts for 5 % of the region T is provided in the region T on the surface V. Therefore, the transmittance of the xenon light decreases to 95 % from 100 %. However, the transmittance of the halogen light has no change. Furthermore, the transmittance adjusting region 42b that accounts for 5 % of the region U is provided in the region U on the surface W. Therefore, the transmittance Tha of the halogen light decreases to 95 % from 100 %. However, the transmittance of the xenon light has no change.

As described above, the provision of the transmittance adjusting regions 41a, 41b, 42a and 42b causes (i) a reduction, by 5%, in the transmittance of the xenon light in each of the regions S and T and (ii) a reduction, by 5%, in the transmittance of the halogen light in each of the regions S and U. This ultimately causes (i) a reduction, by about 5%, in the illuminance of the xenon light in each of the regions S and T and (ii) a reduction, by about 5%, in the illuminance of the halogen light in each of the regions S and U. That is, it is possible that the pseudo-sunlight irradiating apparatus 48 has a uniform illuminance distribution. It is therefore possible to suppress the illuminance unevenness of the light that enters the irradiation surface 13.

In the present embodiment, the transmittance adjusting region 41a that adjusts the transmittance of the xenon light and the transmittance adjusting region 42a that adjusts the transmittance of the halogen light are provided in the region where both the transmittance of the xenon light and the transmittance of the halogen light need to be adjusted. Further, the transmittance adjusting region 41b that adjusts just the transmittance of the xenon light is provided in the region where just the transmittance of the xenon light needs to be adjusted, and the transmittance adjusting region 42b that adjusts just the transmittance of the halogen light is provided in the region where just the transmittance of the halogen light needs to be adjusted. That is, in the region where both the transmittance of the xenon light and the transmittance of the halogen light need to be adjusted, the transmittance adjusting regions for the respective xenon and halogen light are provided, and in the region where the transmittance of the xenon light or the transmittance of the halogen light needs to be adjusted, the transmittance adjusting region for the xenon light or the halogen light is provided. This makes it possible to provide a single transmittance adjusting sheet 40 in the pseudo-sunlight irradiating apparatus 48. It is therefore possible to suppress a reduction in the amount of light that passes through the transmittance adjusting sheet 40.

It is preferable that a multilayer film, which serves as an antireflection film for both the xenon light and the halogen light, is provided in a region other than the transmittance adjusting regions 41a, 41b, 42a and 42b on both the surface V and the surface W of the transmittance adjusting sheet 40. The provision of such an antireflection film makes it possible to suppress a reduction in the amount of light that passes through the region other than the transmittance adjusting regions 41a, 41b, 42a and 42b.

### (How to Provide Transmittance Adjusting Regions 41a, 41b, 42a and 42b)

In a case of providing the transmittance adjusting regions 41a, 41b, 42a and 42b of the present embodiment, a multilayer film that has the property A in which the xenon light hardly passes through is first partially provided, by use of a mask, in the regions S and T on the surface V of the transmittance adjusting sheet 40. Similarly, a multilayer film that has the property B in which the halogen light hardly passes through is partially provided, by use of a mask, in the regions S and U on the surface W of the transmittance adjusting sheet 40. It is thus possible to easily provide the transmittance adjusting regions 41a, 41b, 42a and 42b on the single transmittance adjusting sheet 40.

Note that it is possible in the present embodiment that the transmittance of the xenon light and the transmittance of the halogen light are adjusted by the single transmittance adjusting sheet 40. Therefore, the transmittance adjusting sheet 40 advantageously deals with a case where a range, in which the transmittance needs to be adjusted, is wide. It is possible to adjust, for example as shown in Fig. 15, the illuminance of a large-size pseudo-sunlight irradiating apparatus 48 (1.1 m × 1.77 m) without causing any problem, even in a case where such a large-size pseudo-sunlight irradiating apparatus 48 irradiates an entire solar cell (1m × 1.4m) with light.

In the case of such a large-size pseudo-sunlight irradiating apparatus 48, a plurality of optical system sets are arranged, in accordance with the area of the irradiation surface 13 shown in Fig. 14, in the depth direction perpendicular to a paper surface on which Fig. 14 is illustrated. This allows the pseudo-sunlight irradiating apparatus 48 (see Fig. 13) to be provided. Specifically, the pseudo-sunlight irradiating apparatus 48 can include a plurality of arrayed optical system sets 100 and 101 (see Fig. 16). Fig. 16 is a top view of a plurality of arrayed optical system sets 100 and 101, which top view is obtained in a case where the plurality of arrayed optical system sets 100 and 101 are viewed from a direction indicated by an arrow Z (see Fig. 14). Fig. 16 illustrates an example in which sixteen optical system sets 100 are juxtaposed so that a distance between both ends of the sixteen optical system sets 100 is 1.5 m. As described above, the plurality of arrayed optical system sets 100 and 101 make it possible to irradiate, with light, a region (1 m × 1.4 m) on the irradiation surface 13.

### (Other Embodiment)

The following describes an example of a transmittance adjusting sheet in accordance with still a further embodiment of the present invention with reference to Figs. 17 and 18. Fig. 17 shows how a transmittance adjusting sheet 50 is configured in a case where both transmittance of xenon light and transmittance of halogen light are adjusted. Fig. 18 shows how a transmittance adjusting sheet 50 is configured in a case where a transmittance of xenon light and a transmittance of halogen light are independently adjusted. In Figs. 17 and 18, each area of transmittance adjusting regions 52a through 52d and 53a through 53d accounts for 4 % (film-formed area ratio: 4 %) of a corresponding one of regions (regions 51a through 51d) to be adjusted. Further, each of the regions 51a through 51d is a 25-mm-square.

In Fig. 17, there are provided in advance, on the transmittance adjusting sheet 50, (i) the regions 52a through 52d where the transmittance of the xenon light is to be adjusted and (ii) the regions 53a through 53d where the transmittance of the halogen light is to be adjusted. The transmittance adjusting regions 52a through 52d are respective multilayer films (the property A of Fig. 5) each having a property (wavelength dependency) in which the xenon light hardly passes through, and the transmittance adjusting regions 53a through 53d are respective multilayer films (the property B of Fig. 5) each having a property (wavelength dependency) in which the halogen light hardly passes through.

According to the configuration, the transmittance of the xenon light that passes through the regions 51a through 51d on the transmittance adjusting sheet 50 decreases to 96 % from 100 %. The transmittance Tha of the halogen light that passes through the regions 51a through 51 d on the transmittance adjusting sheet 50 also decreases to 96 % from 100 %.

In a case where just the transmittance of the xenon light is adjusted in the region 51a, the transmittance adjusting region 53a is opened (see Fig. 18). Further, in a case where just the transmittance of the halogen light is adjusted in the region 51b, the transmittance adjusting region 52b is opened. Similarly, in a case where both the transmittance adjusting regions 52c and 53c are opened, the region 51c becomes a region where neither the transmittance of the xenon light nor the transmittance of the halogen light is adjusted (neither the illuminance of the xenon light nor the illuminance of the halogen light is adjusted). On the contrary, in a case where neither the transmittance adjusting regions 52d nor 53d is opened, the region 51d becomes a region where both the transmittance of the xenon light and the transmittance of the halogen light are adjusted (both the illuminance of the xenon light and the illuminance of the halogen light are adjusted).

As described above, the transmittance adjusting sheet 50 can be configured as follows. Namely, (i) the transmittance adjusting regions 52a through 52d and 53a through 53d are provided, in advance, on the transmittance adjusting sheet 50, (ii) it is determined whether or not the transmittance adjusting regions 52a through 52d and 53a through 53d are opened in the regions 51a through 51d, respectively, and (iii) the transmittance of the xenon light and the transmittance of the halogen light in the regions 51a through 51d are adjusted as appropriate.

Alternatively, the transmittance adjusting sheet 50 can be configured as follows. Namely, the transmittance adjusting regions 52a through 52d and 53a through 53d are opened in advance, and then colored glasses, having a transmittance property identical or similar to those of the multilayer films, are fitted into respective opened regions. Instead of providing the multiplayer films, colored glasses (that are cut so as to have an identical size to those of the transmittance adjusting regions 52a through 52d and 53a through 53d), having a property identical to those of the multilayer films, can be attached to the respective transmittance adjusting regions 52a through 52d and 53a through 53d. In this case, regions where no transmittance is adjusted need not to be opened and no colored glasses need to be attached to the regions.

The present invention is not limited to the description of the embodiments, but can be altered by a skilled person in the art within the scope of the claims. An embodiment derived from a proper combination of a plurality of technical means disclosed in different embodiments is encompassed in the technical scope of the present invention.

### (Summary of Embodiments)

As described above, in the pseudo-sunlight irradiating apparatus of the present invention, the first optical member includes: a first converging element that gives the directivity to the first light; and a first taper converging element that gives the directivity to the first light; and the second optical member includes: a second converging element that gives the directivity to the second light; and a second taper converging element that gives the directivity to the second light.

With the configuration, it is possible to restrict a range of an incident angle at which light enters a transmittance adjusting member. It is therefore possible to suppress a reduction in a transmittance caused by the incident angle at which the light enters the transmittance adjusting member. This allows an improvement in transmittance adjusting performance of the transmittance adjustment member.

In the pseudo-sunlight irradiating apparatus of the present invention, the transmittance adjusting member includes at least one of (a) a first transmittance adjusting region where a transmittance of light whose wavelength is longer than the predetermined wavelength is 10 % or less and where a transmittance of light whose wavelength is shorter than the predetermined wavelength is 90 % or more and (b) a second transmittance adjusting region where a transmittance of light whose wavelength is longer than the predetermined wavelength is 90 % or more and where a transmittance of light whose wavelength is shorter than the predetermined wavelength is 10 % or more.

In the pseudo-sunlight irradiating apparatus of the present invention, the transmittance adjusting member includes both the first transmittance adjusting region and the second transmittance adjusting region, and the first transmittance adjusting region is provided in a region different from a region where the second transmittance adjusting region is provided.

According to each of the configurations, (i) the first transmittance adjusting region that has a wavelength dependency in accordance with the wavelength of first light and (ii) the second transmittance adjusting region that has a wavelength dependency in accordance with the wavelength of second light are used. It is therefore possible to independently adjust the transmittance of the first light and the transmittance of the second light. It follows that, even if a region where the transmittance of the first light needs to be adjusted and a region where the transmittance of the second light needs to be adjusted coexist on an irradiation surface, it is possible to simultaneously adjust the transmittance of the first light and the transmittance of the second light in accordance with the first light and the second light, respectively.

In the pseudo-sunlight irradiating apparatus of the present invention, the first transmittance adjusting region and the second transmittance adjusting region have respective openings; in the transmittance adjusting member, a transmittance of the light whose wavelength is longer than the predetermined wavelength is determined by a size of the opening that the first transmittance adjusting region has; and in the transmittance adjusting member, a transmittance of light whose wavelength is shorter than the predetermined wavelength is determined by a size of the opening that the second transmittance adjusting region has.

According to the configuration, even in a case where a degree of illuminance unevenness differs from region to region where the illuminance unevenness occurs, it is possible to adjust the illuminance unevenness in accordance with the degree of the illuminance unevenness by adjusting an area of an opening.

In the transmittance adjusting member of the pseudo-sunlight irradiating apparatus of the present invention, the transmittance of the light whose wavelength is longer than the predetermined wavelength is determined by an area ratio of the first transmittance adjusting region with respect to the transmittance adjusting member; and in the transmittance adjusting member of the pseudo-sunlight irradiating apparatus of the present invention, the transmittance of the light whose wavelength is shorter than the predetermined wavelength is determined by an area ratio of the second transmittance adjusting region with respect to the transmittance adjusting member.

According to the configuration, even in a case where a degree of illuminance unevenness differs from region to region where the illuminance unevenness occurs, it is possible to adjust the illuminance unevenness in accordance with the degree of the illuminance unevenness by adjusting an area ratio of the transmittance adjusting member with respect to a region where a transmittance is adjusted.

In the pseudo-sunlight irradiating apparatus of the present invention, the first light source is a xenon light source that emits xenon light serving as the first light; and the second light source is a halogen light source that emits halogen light serving as the second light.

According to the configuration, it is possible to emit artificial light that has an emission spectrum extremely similar to that of natural light (sunlight).

The concrete embodiments and examples discussed in the detailed description serve solely to illustrate the technical details of the present invention, which should not be narrowly interpreted within the limits of such embodiments and concrete examples, but rather can be applied in many variations within the spirit of the present invention, provided that such variations do not exceed the scope of the patent claims set forth below.

### Industrial Applicability

The present invention is applicable to inspection, measurement and testing of a solar cell, and is also applicable to tests for fading and light-resistance of materials such as cosmetics, paint and adhesive. Further, the present invention is applicable to inspection and testing for photocatalyst and other tests that use natural light.

### Reference Signs List

- 1:: Xenon Lamp
- 2 and 5:: Reflector
- 3 and 6:: Taper Coupler
- 4:: Halogen Lamp
- 7:: Wavelength Selection Mirror
- 8 and 9:: Optical Filter
- 10:: Light Guide Plate
- 11:: Prism Sheet
- 12a to 12c, 31, 32a, 32b, 40 and 50:: Transmittance Adjusting Sheet
- 13:: Irradiation Surface
- 16:: Xenon Light Source
- 17:: Halogen Light Source
- 18, 38 and 48:: Pseudo-sunlight irradiating apparatus
- 19:: Scatterer
- 21a to 21e:: Opening
- 22:: Wavelength Selection Film Region
- 33a to 33f, 41a, 41b, 42a, 42b, 52a to 52d and 53a to 53d:: Transmittance Adjusting Region
- 51a to 51d:: Region
- 100 and 101:: Optical System Set

## Claims

1. A pseudo-sunlight irradiating apparatus, comprising:
a first light source which emits first light;
a first optical member which gives a directivity to the first light;
a first optical filter which adjusts an emission spectrum of the first light to which the directivity is given;
a second light source which emits second light different from the first light;
a second optical member which gives a directivity to the second light;
a second optical filter which adjusts an emission spectrum of the second light to which the directivity is given;
a light selection element which selects and emits (i) light, whose wavelength is shorter than a predetermined wavelength, in the first light whose emission spectrum has been adjusted and (ii) light, whose wavelength is longer than the predetermined wavelength, in the second light whose emission spectrum has been adjusted;
a light guide plate which (i) the light whose wavelength is shorter than the predetermined wavelength and (ii) the light whose wavelength is longer than the predetermined wavelength that are selected by the light selection element enter;
light extraction means, provided to the light guide plate, which directs, toward an irradiation surface, (i) the light whose wavelength is shorter than the predetermined wavelength and (ii) the light whose wavelength is longer than the predetermined wavelength which have entered the light guide plate; and
a transmittance adjusting member, provided so as to be closer to the irradiation surface than to the light extraction means, in which a light transmittance has a wavelength dependency.

2. The pseudo-sunlight irradiating apparatus as set forth in claim 1, wherein:
the first optical member includes:
a first converging element that gives the directivity to the first light; and
a first taper converging element that gives the directivity to the first light; and
the second optical member includes:
a second converging element that gives the directivity to the second light; and
a second taper converging element that gives the directivity to the second light.

3. The pseudo-sunlight irradiating apparatus as set forth in claim 1 or 2, wherein:
the transmittance adjusting member includes at least one of (a) a first transmittance adjusting region where a transmittance of light whose wavelength is longer than the predetermined wavelength is 10 % or less and where a transmittance of light whose wavelength is shorter than the predetermined wavelength is 90 % or more and (b) a second transmittance adjusting region where a transmittance of light whose wavelength is longer than the predetermined wavelength is 90 % or more and where a transmittance of light whose wavelength is shorter than the predetermined wavelength is 10 % or more.

4. The pseudo-sunlight irradiating apparatus as set forth in claim 3, wherein:
the transmittance adjusting member includes both the first transmittance adjusting region and the second transmittance adjusting region, and
the first transmittance adjusting region is provided in a region different from a region where the second transmittance adjusting region is provided.

5. The pseudo-sunlight irradiating apparatus as set forth in claim 3 or 4, wherein:
the first transmittance adjusting region and the second transmittance adjusting region have respective openings;
in the transmittance adjusting member, a transmittance of the light whose wavelength is longer than the predetermined wavelength is determined by a size of the opening that the first transmittance adjusting region has; and
in the transmittance adjusting member, a transmittance of light whose wavelength is shorter than the predetermined wavelength is determined by a size of the opening that the second transmittance adjusting region has.

6. The pseudo-sunlight irradiating apparatus as set forth in claim 3 or 4, wherein:
in the transmittance adjusting member, the transmittance of the light whose wavelength is longer than the predetermined wavelength is determined by an area ratio of the first transmittance adjusting region with respect to the transmittance adjusting member; and
in the transmittance adjusting member, the transmittance of the light whose wavelength is shorter than the predetermined wavelength is determined by an area ratio of the second transmittance adjusting region with respect to the transmittance adjusting member.

7. The pseudo-sunlight irradiating apparatus as set forth in any one of claims 1 to 6, wherein:
the first light source is a xenon light source that emits xenon light serving as the first light; and
the second light source is a halogen light source that emits halogen light serving as the second light.
